# FASCICULE DE BREVET EUROPEEN

(11) **EP 2 459 602 B1**
(45) Date de publication et mention de la délivrance du brevet: **23.10.2013**
(21) Numéro de dépôt: 10752075.1
(22) Date de dépôt: 22.07.2010
(51) Int. Cl.: C08F 210/02, C08F 226/06, C09J 139/04, C09J 123/08

(54) **POLYMERES OLEFINIQUES PORTEURS DE GROUPES ASSOCIATIFS ET ADHESIFS LES COMPRENANT**
OLEFINPOLYMERE MIT ASSOZIATIVEN GRUPPEN UND HAFTSTOFFE DAMIT
OLEFIN POLYMERS HAVING ASSOCIATIVE GROUPS, AND ADHESIVES CONTAINING SAME

(30) Priorité: 28.07.2009 FR 0955270; 26.03.2010 FR 1052217
(43) Date de publication de la demande: 06.06.2012
(73) Titulaire: Arkema France, 92700 Colombes (FR)
(72) Inventeur: DEVISME, Samuel, F-76000 Rouen (FR); DUFAURE, Nicolas, F-27300 Bernay (FR); LAURICHESSE, Christian, F-64140 Lons (FR); HIDALGO, Manuel, F-69530 Brignais (FR)
(86) Numéro de dépôt international: PCT/FR2010/051549
(87) Numéro de publication internationale: WO 2011/012799

(56) Documents cités:
- EP-A2- 0 175 562
- DE-A1- 4 341 528
- DE-A1-102005 007 158
- FR-A1- 2 896 499
- US-A- 5 747 616
- US-A1- 2005 176 876

## Description

La présente invention concerne des polymères oléfiniques porteurs de groupes associatifs à base d'hétérocycles azotés, des adhésifs thermofusibles comprenant de tels polymères, ainsi que leurs procédés d'obtention.

Les colles ou adhésifs thermofusibles sont des matériaux thermoplastiques solides à la température ambiante et qui par chauffage deviennent des liquides visqueux. Ces liquides visqueux sont appliqués sur un premier substrat que l'on couvre avec une seconde surface. Par refroidissement, on obtient une adhérence entre le substrat et la deuxième surface, grâce à la couche d'adhésif présente entre les deux. Le temps ouvert est la période pendant laquelle la colle qui a été appliquée sur un substrat qui est, le plus souvent à la température ambiante, reste collante, c'est-à-dire l'intervalle de temps pendant lequel on peut appliquer la seconde surface et par refroidissement obtenir une adhérence entre le substrat et la seconde surface. Passé ce délai du temps ouvert on ne peut plus obtenir une adhérence suffisante entre le substrat et la seconde surface. Le temps de prise est le temps minimum nécessaire pour que le joint de colle assure la cohésion de l'ensemble.

Ces colles sont désignées par l'abréviation HMA (hot melt adhesives). La présente invention concerne ce type d'adhésifs. Ces compositions adhésives thermofusibles comportent généralement deux constituants principaux : un polymère thermoplastique - responsable des bonnes propriétés mécaniques et thermiques et d'au moins une partie des propriétés adhésives - et une résine tackifiante qui intervient pour améliorer la pégosité à chaud, la fluidité ou la mouillabilité. On y ajoute le plus souvent un certain nombre d'additifs tels que des plastifiants dont des huiles, ou des cires, des stabilisants, des charges. Les cires (par exemple des paraffines) permettent d'ajuster la fluidité, le temps ouvert et le temps de prise. Parmi les polymères thermoplastiques les plus utilisés, on peut citer les copolymères éthylène-acétate de vinyle, éthylène-(meth)acrylate d'alkyle, copolymères polystyrène-polybutadiène-polystyrène, poly-alpha-oléfine atactique (APAO), caoutchouc thermoplastique, polyamide et autres. Les résines tackifiantes appartiennent principalement à trois grandes familles : les colophanes (et leurs dérivés), les résines terpéniques et les résines dérivées de pétrole (aliphatiques, aromatiques, et autres).

Les inventeurs ont montré que l'utilisation d'un polymère oléfinique porteur de groupes associatifs à base d'hétérocycle azoté répondant à la formule (I), permet notamment d'améliorer l'adhésion à chaud entre deux supports.

En particulier, les inventeurs ont montré qu'un polymère spécifique comportant des motifs issus de la copolymérisation entre l'éthylène et, au moins un monomère ethylénique insaturé porteur de groupes associatifs de formule (I) à base d'hétérocycle azoté permet d'améliorer l'adhésion entre une plaque d'aluminium et une plaque de verre, par rapport aux mêmes polymères ne portant pas de groupes associatifs. Les inventeurs ont aussi découvert que l'utilisation de ce type de polymère permet aussi de réduire le temps de prise et d'augmenter le temps ouvert d'utilisation des adhésifs définis ci-dessus.

Les inventeurs ont montré qu'un tel polymère permet aussi d'améliorer le temps de collage d'un adhésif thermofusible le comprenant, en plus d'une adhésion améliorée. Ce polymère permet ainsi de réduire la quantité de résine tackifiante à ajouter pour obtenir un niveau d'adhésion équivalent à celui d'un adhésif habituel. Ces groupes associatifs confèrent également une excellente résistance mécanique au polymère, en particulier une augmentation de la résistance au fluage à haute température, particulièrement à des températures proches ou supérieures à la température de fusion du polymère. Cette propriété est particulièrement intéressante dans des applications où une tenue en température améliorée est demandée. Par exemple, ce polymère peut être utilisé comme couche scellante dans les opercules utilisées dans des emballages alimentaires (barquettes, pots) subissant un traitement thermique à une température intermédiaire comme la pasteurisation. Cette résistance au fluage améliorée permet aussi d'améliorer les propriétés de tenue de la soudure à chaud ou « hot tack » d'une structure multicouche. Cette résistance au fluage permet l'utilisation de tels polymères dans les applications de formage, remplissage et soudage ou « form fill seal » dans lequel les soudures sont fortement sollicitées à chaud à cause des grandes cadences, mais aussi dans les procédés de remplissage à chaud ou « hot filling ».

L'invention a donc pour objet un polymère comportant des motifs issus de l'éthylène et d'un monomère porteur de groupes associatifs, ledit monomère porteur de groupes associatifs comprenant :
(i) un groupe réactif capable de polymériser qui comprend une fonction éthylènique, de préférence choisi parmi un groupe (meth)acrylate ou (meth)acrylamide N mono-substitué ou N,N di-substitué, un groupe vinyle, allyle ou styrile ;
   et
(ii) un groupe associatif comprenant un hétérocycle azoté répondant à la formule (I).

Au sens de la présente invention, on entend par « polymère » un copolymère comportant des motifs monomères d'au moins deux types. Le terme « polymère » selon l'invention inclut également les copolymères pouvant comporter des motifs de trois types différents ou plus. Le terme « polymère » utilisé dans la présente description inclut donc notamment des copolymères et terpolymères.

Les groupes réactifs capables de polymériser ou fonctions polymérisables, d'une part et les groupes associatifs d'autre part, du monomère associatif peuvent être séparés par une chaîne alkylène rigide ou flexible, constituée de 1 à 30 atomes de carbone dont certains au moins peuvent être substitués, et éventuellement d'un ou plusieurs hétéroatomes, choisis en particulier parmi le soufre, l'oxygène et l'azote, ladite chaîne renfermant éventuellement un ou plusieurs ponts ester ou amide. Il s'agit de préférence d'une chaîne alkyle linéaire ou ramifiée en C₁-C₂₄, de préférence C₁-C₁₀ éventuellement interrompue par un ou plusieurs atomes d'azote, plus préférentiellement d'une chaîne alkyle linéaire en C₁-C₆.

Ladite chaine rigide ou flexible ne comprend pas de fonction isocyante.

Par "groupes associatifs", on entend des groupes susceptibles de s'associer les uns aux autres par des liaisons hydrogène, ioniques et/ou hydrophobes. Il s'agit de groupes susceptibles de s'associer par des liaisons hydrogène, comprenant un hétérocycle azoté généralement à 5 ou 6 atomes, diazoté, et comprenant une fonction carbonyle. Des exemples de groupes associatifs utilisables selon ce mode préféré de l'invention sont les groupes imidazolidinyle, triazolyle, triazinyle, bis-uréyle, uréido-pyrimidyle. Le groupe imidazolidinyle est préféré.

Le groupe réactif capable de polymériser est de préférence un groupe (meth)acrylate ou (meth)acrylamide. D'autres fonctions éthyléniques réactives en polymérisation peuvent également être envisagées, par exemple les fonctions ou groupes vinyle.

Le monomère porteur de groupes associatifs répond à la formule (1) : 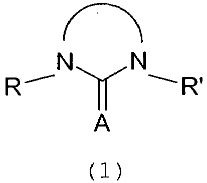 où :
R- désigne un groupe de formule T-(G)ₙ- dans lequel T est un groupe réactif capable de polymériser qui comprend une fonction éthylènique, de préférence choisi parmi un groupe (meth)acrylate ou (meth)acrylamide N mono-substitué ou N,N di-substitué, un groupe vinyle, allyle ou styrile ; n vaut 0 ou 1 et G est une chaîne alkylène linéaire ou ramifiée en C1-C24, de préférence C1-C10 éventuellement interrompue par un ou plusieurs atomes d'azote, plus préférentiellement une chaîne alkylène linéaire en C1-C6.
R' désigne un atome d'hydrogène,
A désigne un atome d'oxygène ou de soufre, de préférence un atome d'oxygène.

Des exemples préférés de monomères porteurs de groupes associatifs sont le methacrylate d'éthylimidazolidone et le methacrylamide d'éthylimidazolidone.

le methacrylate d'éthylimidazolidone peut être préparé selon le procédé décrit dans la demande EP0829475.

le methacrylamide d'éthylimidazolidone peut être préparé selon le procédé décrit dans la demande US 2727016.

De préférence, ledit monomère porteur de groupes associatifs ne comprend pas de fonction isocyanate, et de manière tout à fait préférée, ledit monomère porteur de groupes associatifs est constitué exclusivement d'un groupe réactif tel que défini ci-dessus et d'un hétérocycle azoté.

Les polymères selon l'invention peuvent comprendre d'autres monomères en plus de l'éthylène et des monomères associatifs définis ci-dessus. Ces monomères sont désignés dans la présente description comme « autres monomères » c'est-à-dire des monomères ne comprenant pas d'éthylène ni de groupes associatifs. Il peut s'agir par exemple :
■ d'un acide carboxylique insaturé tel que l'acide acrylique ou l'acide méthacrylique. La quantité d'acide carboxylique insaturé est généralement inférieure à 50% de la masse totale du polymère et peut être comprise dans la gamme allant de 5 à 40%;
■ d'un ester d'acide carboxylique insaturé tel que les acrylates d'alkyle ou les méthacrylates d'alkyle. Les chaînes alkyles de ces (méth)acrylates sont linéaires ou ramifiées et peuvent avoir jusqu'à 30 atomes de carbone, par exemple de 1 à 10 atomes de carbone. On peut citer comme chaînes alkyles le méthyle, l'éthyle, le propyle, n-butyle, sec-butyle, Isobutyle, tert-butyle, pentyle, hexyle, heptyle, octyle, 2-ethylhexyle, nonyle, decyle, undecyle, dodecyle, tridecyle, tetradecyle, pentadecyle, hexadecyle, heptadecyle, octadecyle, nonadecyle, eicosyle, hencosyle, docosyle, tricosyle, tetracosyle, pentacosyle, hexacosyle, heptacosyle, octacosyle, nonacosyle. On préfère les (méth)acrylates de méthyle, éthyle, n-butyle et de 2-éthylhexyle comme esters d'acide carboxylique insaturés. La quantité d'ester d'acide carboxylique insaturé est généralement inférieure à 50% de la masse totale du polymère et peut être comprise dans la gamme allant de 5 à 40% ;
■ d'un ester vinylique d'acide carboxylique comprenant préférentiellement de 4 à 40 atomes de carbone, par exemple de 4 à 10 atomes de carbone. A titre d'exemples d'esters vinyliques d'acide carboxylique, on peut citer l'acétate de vinyle, le versatate de vinyle, le propionate de vinyle, le butyrate de vinyle ou le maléate de vinyle. On préfère l'acétate de vinyle comme ester vinylique d'acide carboxylique. La quantité d'ester vinylique d'acide carboxylique est généralement inférieure à 50% de la masse totale du polymère et peut être comprise dans la gamme allant de 5 à 40%;
■ d'une alpha-oléfine, celle-ci étant différente de l'éthylène, comprenant préférentiellement de 3 à 50 atomes de carbone, plus préférentiellement de 4 à 20 atomes de carbone, tout préférentiellement de 6 à 10 atomes de carbone. A titre d'exemple d'alpha-oléfine, on peut citer le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. La quantité d'alpha-oléfine est généralement inférieure à 10% de la masse totale du polymère et peut être comprise dans la gamme allant de 0,1 à 5%;
■ d'un diène, comprenant préférentiellement de 3 à 50 atomes de carbone, plus préférentiellement de 3 à 20 atomes de carbone. A titre d'exemple de diène, on peut citer le butadiène ou l'éthylidène norbornène. La quantité de diène est généralement inférieure à 10% de la masse totale du polymère et peut être comprise dans la gamme allant de 0,1 à 5%;
■ d'un anhydride d'acide carboxylique insaturé comprenant préférentiellement de 4 à 30 atomes de carbone. On peut citer comme anhydride d'acide carboxylique insaturé l'anhydride maléique, l'anhydride itaconique, l'anhydride citraconique, l'anhydride tétrahydrophtalique. On préfère l'anhydride maléique comme anhydride d'acide carboxylique insaturé. La quantité d'un anhydride d'acide carboxylique insaturé est généralement inférieure à 10% de la masse totale du polymère et peut être comprise dans la.gamme allant de 0,1 à 5%;
■ d'un époxyde insaturé comprenant préférentiellement de 4 à 30 atomes de carbone. Il peut s'agir d'esters ou d'éthers de glycidyle aliphatiques tels que l'allylglycidyléther, le vinylglycidyléther, le maléate et l'itaconate de glycidyle, l'acrylate et le méthacrylate de glycidyle. Il peut également s'agir d'esters et d'éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocisbicyclo(2,2,1)-5-heptène-2,3-diglycidyl dicarboxylate. On préfère le méthacrylate de glycidyle comme époxyde insaturé. La quantité d'époxyde insaturé est généralement inférieure à 10% de la masse totale du polymère et peut être comprise dans la gamme allant de 0,1 à 5%.

Selon une variante préférée de l'invention, le polymère comprend d'autres monomères choisis parmi les esters vinyliques d'acide carboxylique ou les esters d'acide carboxylique insaturé. Selon cette variante, le polymère objet de l'invention peut être un polymère issu de la polymérisation de monomères comprenant de :
■ l'éthylène ;
■ du monomère associatif, préférentiellement le methacrylate d'éthylimidazolidone ou le methacrylamide d'éthylimidazolidone ;
■ et d'au moins un autre monomère choisi parmi l'acétate de vinyle, le (méth)acrylate de méthyle, d'éthyle, de n-butyle et de 2-éthylhexyle.

Le polymère objet de l'invention peut être un polymère issu de la polymérisation de monomères comprenant, en masse par rapport à la masse totale du polymère de :
- 35 à 99.98% d'éthylène, préférentiellement 55 à 89.9% ;
- 0.01 à 20% d'au moins un monomère associatif, préférentiellement de 0,1 à 10% ;
- 0,01 à 50% d'au moins un autre monomère qui n'est pas un monomère associatif ou de l'éthylène, préférentiellement de 10 à 40%.

De préférence, ledit autre monomère est choisi parmi les esters d'acide carboxylique insaturés et les esters vinyliques d'acides carboxyliques insaturés et leurs mélanges.

Les quantités des différents monomères présents dans le copolymère peuvent être mesurées par spectroscopie infrarouge en utilisant la norme ISO 8985 (1998).

Selon l'invention, pour obtenir le polymère comprenant des groupes associatifs, lesdits monomères porteurs des groupes associatifs sont introduits pendant la polymérisation, en mélange avec l'éthylène et éventuellement les autres monomères utilisés pour construire le polymère. Ainsi, les monomères porteurs de groupes associatifs s'insèrent dans le squelette même des chaînes polymère tout en portant lesdits groupes associatifs à base d'hétérocycle azoté.

Le polymère objet de l'invention peut ainsi être obtenu par polymérisation selon un procédé original, conduit sous pression, comme indiqué ci-après.

Les polymères sont préparés par un procédé de polymérisation radicalaire sous haute pression. La polymérisation peut être effectuée par exemple dans un réacteur autoclave agité ou tubulaire.

La pression à l'intérieur du réacteur est généralement comprise entre 1000 et 3000 bar, préférentiellement entre 1500 et 2500 bar. La température lors de l'initiation de la réaction est généralement comprise entre 100 et 300°C avantageusement entre 100 et 170°C. La température maximale de réaction est comprise entre 180 et 300°C et de manière préférée comprise entre 180 et 260°C.

La copolymérisation est généralement effectuée en introduisant l'éthylène, le monomère associatif, et éventuellement les autres monomères et un initiateur de polymérisation, à pression élevée dans un réacteur autoclave ou tubulaire à une température comprise entre 100°C et 150°C, la quantité des comonomères porteurs de groupes associatifs allant préférentiellement jusqu'à 20% en poids par rapport à la quantité totale des monomères (éthylène et autres comonomères) introduits dans le réacteur. Lorsqu'un réacteur tubulaire est utilisé, de préférence, l'introduction du mélange de l'éthylène, des monomères et de l'initiateur de polymérisation est effectuée en entrée du réacteur tubulaire, et éventuellement en au moins un autre point d'injection situé le long du réacteur tubulaire, on parle alors de technique d'injection multipoint.

Avec les monomères et l'initiateur, on peut également utiliser un agent de transfert dans des proportions molaires inférieures à 1%. Ces agents de transfert qui permettent de contrôler les masses moléculaires sont en général des aldéhydes ou des cétones aliphatiques, on peut citer par exemple le propanaldéhyde ou la MEK (Methyl Ethyl Cetone).

La quantité d'initiateur varie entre 10 et 1000 ppm par rapport aux monomères introduits.

A titre d'initiateur de polymérisation, tous les composés organiques et inorganiques qui libèrent des radicaux libres dans les conditions de la réaction pourront être utilisés, de préférence on utilisera des mélanges de composés comprenant un groupement peroxyde. Parmi les familles de peroxydes utilisés on peut citer par exemple : les peroxyesters, les diacyls, les percarbonates, les peroxyketals, les dialkyls et les hydroperoxydes.

Les peroxydes bien adaptés sont par exemple le ter-butyl peroxyneodecanoate, le ter-butyl peroxy 2 ethyl hexanoate, le tert-butylperoxy-3,5,5-trimethylhexanoate, le ter-butyl peroxypivalate, le di-ter-butylperoxide

Ainsi, l'invention a encore pour objet un procédé de préparation de polymères tels que définis ci-dessus, par copolymérisation radicalaire haute pression effectuée en introduisant de l'éthylène, un monomère porteur de groupes associatifs, éventuellement un ou plusieurs autres monomères, un initiateur de polymérisation et éventuellement un agent de transfert dans un réacteur tubulaire à une pression comprise entre 1000 et 3000 bars, à une température comprise entre 80 et 325°C, la quantité de monomères porteurs de groupes associatifs introduits allant jusqu'à 20% en masse par rapport à la masse totale du mélange d'éthylène, et de monomères porteurs de groupes associatifs introduits.

Le nombre de groupes associatifs portés par le polymère dans cette forme d'exécution selon l'invention peut être simplement ajusté en faisant varier la quantité de monomère porteur de groupes associatifs ou le temps et la température de réaction. On préfère en général que la quantité de monomère associatif représente de 0,1 à 20% en poids, de préférence de 0.2% à 15%, de préférence de 0.2% à 10% en poids par rapport au poids du polymère et/ou que le nombre moyen de groupes associatifs par chaîne de polymère soit compris entre 1 et 200, de préférence entre 1 et 100, et de manière tout à fait préférée entre 1 et 50 ou entre 1 et 30.

Il a été mis en évidence que le polymère objet de l'invention permet d'améliorer l'adhésion entre deux supports, par rapport aux mêmes polymères ne portant pas de groupes associatifs. Les inventeurs ont montré qu'un tel polymère permet aussi d'améliorer le temps de collage d'un adhésif thermofusible le comprenant

La présente invention a donc également pour objet l'utilisation d'un polymère comprenant des monomères associatifs tel que décrit précédemment, pour améliorer le comportement cohésif et adhésif en fonction de la température de compositions adhésives dont il peut faire partie.

L'invention a encore pour objet un adhésif thermofusible comprenant un polymère tel que défini ci-dessus ainsi que l'utilisation d'un polymère tel que défini ci-dessus pour la fabrication d'un adhésif thermofusible.

De préférence, les adhésifs thermofusibles comprenant le polymère de l'invention comprennent en outre au moins une résine tackifiante.

Ces adhésifs sont généralement déposés à chaud sur un substrat.

Des résines tackifiantes qui conviennent, sont par exemple la colophane, les esters de colophane, la colophane hydrogénée, les polyterpènes et dérivés, les résines de pétrole aromatiques ou aliphatiques, les résines cycliques hydrogénées. Ces résines ont typiquement une température de ramollissement bille anneau entre 25°C et 180°C et de préférence entre 50°C et 135°C.

D'autres exemples de dérivés de colophane sont décrits dans ULLMAN'S Vol A 23 p. 79 - 86.

A titre de dérivés de la colophane on peut citer ceux obtenus par hydrogénation, deshydrogénation, polymérisation, estérification. Ces dérivés peuvent être utilisés tels quels ou sous forme d'esters de polyols tels que les esters de pentaerythritol, polyéthylène glycol et glycérol.

A titre de résine tackifiante on peut encore citer les dicyclopentadiènes.

La présence d'un polymère porteur de groupes associatifs dans l'adhésif objet de l'invention, permet d'améliorer l'adhésion sur différents substrats (verre, métal, papier, film polymère (polyester)).

Ainsi, dans un mode de réalisation préféré de l'invention, l'adhésif comprend 1 à 70 parties de résine tackifiante pour 100 parties du mélange de polymère et résine, et de préférence 20 à 50 parties de résine pour 100 parties du mélange de polymère et résine.

Les adhésifs objets de l'invention peuvent comprendre en outre un ou plusieurs plastifiants en tant qu'additif.

Les plastifiants que l'on peut utiliser dans les adhésifs de l'invention sont par exemple des huiles minérales paraffiniques aromatiques ou naphténiques. Ils servent essentiellement à baisser la viscosité et à apporter du tack. La quantité de plastifiant peut être comprise entre 10 et 30 parties pour 100 parties du mélange d'adhésif.

A titre de plastifiant on peut encore citer les phtalates, azelates, adipates, le phosphate de tricresyl et les polyesters.

Les adhésifs de l'invention peuvent comprendre également des charges et des stabilisants en tant qu'additifs.

A titre d'exemple de charges, on peut citer la silice, l'alumine, le verre, les billes de verre, les carbonates de calcium, les fibres, et hydroxydes métalliques. Ces charges ne doivent pas trop réduire le tack ni les propriétés mécaniques ou adhésives de la colle après son application. La quantité de charges peut représenter jusqu'à 100 parties pour 100 parties d'adhésif.

Il est recommandé d'ajouter des stabilisants tels que les antioxydants ; on peut utiliser les antioxydants habituels des thermoplastiques.

Les adhésifs de l'invention sont préparées par mélange à l'état fondu à des températures comprises entre 120°C et 200°C jusqu'à ce qu'on obtienne un mélange homogène. La durée de mélange peut être de l'ordre de 30 minutes à 3 heures. On peut utiliser les dispositifs habituels pour la mise en oeuvre des thermoplastiques tels que des mélangeurs internes, des extrudeuses, des cylindres. On peut également utiliser des cuves chauffées et convenablement agitées lorsque la fluidité à l'état fondu des formulations adhésives le permet.

Il a été mis en évidence que le polymère objet de l'invention permet d'améliorer l'adhésion à chaud entre deux supports.

Ainsi, un polymère porteur de groupes associatifs tel que décrit précédemment, peut être utilisé pour améliorer l'adhésion et/ou la mise en forme de l'adhésif ; en d'autre termes, on obtient un collage avec un temps de prise plus court pour une même efficacité et une facilité d'application (meilleur mouillabilité sur le verre, aspect de gel qui favorise le dépôt sur le substrat lors de l'enduction (moins de filaments de matière) ce qui permet de réduire la quantité de résine tackifiante à utiliser pour avoir les propriétés souhaitées.

L'ajout de ces groupes associatifs peut aussi permettre d'améliorer la cohésion des colles et adhésifs, de rendre la couche de colle plus résistante, par exemple en limiter le déchirement lors de l'application d'une contrainte. A l'inverse des colles réticulées connues, l'adhésif objet de la présente invention peut être remis en forme à haute température grâce à ses liaisons thermoréversibles. Ces groupes associatifs peuvent aussi conférer à l'adhésif une meilleure résistance aux solvants.

La présente invention a également pour objet l'utilisation d'un adhésif tel que décrit précédemment pour la fabrication d'étiquettes, d'adhésifs pour lier deux feuilles ou couches de papier entre elles ou bien une feuille ou couche de papier avec un autre objet, tel qu'un sachet en plastique ou en papier plastifié, de colles thermofusibles structurales ou de réparation utilisables dans la construction, le bricolage, la fabrication d'objets y compris d'articles d'hygiène tels que des couches ou des serviettes jetables, y compris également des pièces composantes des véhicules, des bateaux, des avions, y compris aussi des articles d'habillement ou de décoration tels que des chaussures, des vêtements, des meubles et d'objets décoratifs, y compris des articles de bureautique comme des porte-papiers, des lampes, ainsi que tout autre application nécessitant l'assemblage de deux surfaces sans utilisation de véhicule liquide (eau ou solvant). On pourra également, grâce aux adhésifs thermofusibles de l'invention, porteurs de groupes associatifs, effectuer des collages sur des supports difficiles, comme le carton et ou les revêtements de sol.

La présente invention a également pour objet l'utilisation d'un adhésif tel que décrit précédemment pour lier ou coller entre eux des matériaux, par exemple sous forme de feuilles, de nature chimique identique ou différente choisis parmi des matériaux plastiques en particulier à base de polyéthylène téréphtalate (PET) et autres polyesters, de polypropylène, de polyéthylène, de PVC, d'ABS, de PMMA et de polycarbonate,de bois, d' élastomères, de textile, de papier, de carton, de verre, et de métal, par exemple l'aluminium.

De manière plus générale, le polymère objet de l'invention peut être utilisé dans toutes les applications habituelles des polyoléfines fonctionnelles.

L'invention sera mieux comprise à la lumière des exemples suivants, donnés à des fins d'illustration seulement et qui n'ont pas pour but de restreindre la portée de l'invention, définie par les revendications annexées.

### Exemple 1 : Préparation d'un polymère selon l'invention

Les polymères sont préparés par un procédé de polymérisation radicalaire sous haute pression dans un réacteur tubulaire de 233 cm³. De l'éthylène, de l'acétate de vinyle (appelé VA) et des monomères choisis parmi le Norsocryl® 104 (mélange à 50% en poids de méthacrylate d'éthyl imidazolidone, appelé MEIO, et de méthacrylate de méthyle), le Norsocryl® 105 (mélange à 40% en poids de MEIO, et 60% d'acrylate de 2-éthyl hexyle, appelé AE2H) et le méthacrylate de méthyle (appelé MAM) (les différentes compositions des polymères obtenus sont reprises dans le tableau ci-dessous) sont introduits dans le réacteur en présence d'un initiateur de polymérisation qui est un mélange de Luperox®10 / Luperox® 26/ Luperox® 270 en proportion 88/32/12 (% massique) et de 3000 ppm d'un agent de transfert (propanal). La pression est fixée à 2.10⁸ Pa et la température initiale à 135°C.

Les produits de dénomination commerciale Norsocryl et Luperox peuvent être obtenus auprès de la société Arkema.

Les produits obtenus présentent les caractéristiques suivantes, rassemblées dans le tableau 1.

**Tableau 1**

| Réf essais | VA | MEIO | MAM | AE2H | peroxyde injecté ppm poids | Pression (Pa) | Tmax de polymerisation (en °C) | Taux de conversion (en %) |
|---|---|---|---|---|---|---|---|---|
| T08 /E -VA/46 | 28 | | | | 130 | 2.10⁸ | 235 | 12.91 |
| T08 /E -VA-MAM/1 | 27.6 | | 0.48 | | 130 | 2.10⁸ | 210 | 12.8 |
| T08 /E -VA-MAM-MEIO/1 | 28.1 | 0.48 | 0.48 | | 131.5 | 2.10⁸ | 200 | 9.29 |
| T08 /E -VA-MAM-MEIO/2 | 27.7 | 0.24 | 0.24 | | 128.2 | 2.10⁸ | 225 | 11.49 |
| T08 /E -VA-MAM-MEIO/3 | 28.1 | 0.12 | 0.12 | | 132.5 | 2.10⁸ | 238 | 13.48 |
| T08 /E -VA-AE2H-MEIO/1 | 28.1 3 | 0.48 | | 0.72 | 131.1 | 2.10⁸ | 205 | 10.85 |

Où
- VA signifie : monomère acétate de vinyle injecté (% en poids)
- MEIO signifie : monomère methacrylate d'éthylimidazolidone injecté (% en poids)
- MAM signifie : monomère methacrylate de méthyle injecté (% en poids)
- AE2H signifie monomère acrylate de 2-éthylhexyle injecté (% en poids)

Les caractéristiques des produits obtenus sont présentées dans le tableau 2.

**Tableau 2**

| Références | % massique VA RMN | % massique MAM RMN | % massique MEIO RMN | % massique AE2H RMN | Melt Index 190°C-2.16kg en g/10min |
|---|---|---|---|---|---|
| T08 /E-VA/46 | 26.9 | / | | | 406 |
| T08 /E-VA-MAM/1 | 26.7 | 3.8 | | | 350 |
| T08 /E-VA-MAM-MEIO/1 | 26.1 | 4.7 | 4 | | 230 |
| T08 /E-VA-MAM-MEIO/2 | 26.2 | 1.8 | 1.3 | | 261 |
| T08 /E-VA-MAM-MEIO/ 3 | 27.1 | 0.8 | 0.5 | | 387 |
| T08 /E-VA-AE2H-MEIO/1 | 25.6 | | 4 | 4.6 | 265 |

### Exemple 2 : Préparation de formulations hot melt

Les formulations hot melt réalisées ont été les suivantes :
- 35 % d'un des polymères dont la synthèse est décrite dans l'exemple précédent ;
- 50 % de résine Escortez® 5600 (résine aliphatique, commercialisée par la société Exxon) ;
- 15 % de cire Sasolwax® H1 (cire Fischer-Tropsch commercialisée par la société Sasol).

La formulation est stabilisée avec 0.2 % d'un antioxydant Irganox® 1010 commercialisé par la société CIBA-GEIGY.

La formulation est réalisée par mélange des 3 composants à une température de 170°C pendant 30mn, puis sous agitation manuelle (3 fois) pendant un minimum d'une heure.

### Exemple 3 : Tests d'adhésion entre verre et aluminium

Les formulations hot melt décrites dans l'exemple 2 ont été évaluées pour l'adhésion entre verre et aluminium.

Des films ont été préparés avec les compositions décrites précédemment par enduction à 170°C, avec une vitesse de l'applicateur automatique (« applicateur automatique de film » de marque BRAIVE instrument) fixée à 6 cm/s. Les films sont refroidis à l'air ambiant.

Un couchage sur feuille aluminium de 100 microns est ensuite effectué. La surface est de 225 cm² (15x15 cm²), le grammage final est de 35-38 g/m², soit 0,85g pour une surface de 225 cm². Des bandes de 25 mm de large sont ensuite découpées à l'aide d'une découpeuse à bande.

Les formulations HMA comprenant un polymère à motifs à base de MEIO présentent un aspect "gel" qui lors de l'enduction favorise le dépôt, il y a moins de fils de matière que dans les formulations utilisant les polymères sans MEIO. Ce point représente un premier avantage commun aux polymères objets de l'invention.

Un collage sur plaques de verre de 3 mm d'épaisseur est ensuite réalisé par pressage à 150°C sous 800 dN pendant 4 minutes. Les produits sont ensuite refroidis en étant placés sous une plaque d'inox surmontée d'un poids de 5kg, le tout à l'air ambiant. L'épaisseur finale du joint de colle est d'environ 30 microns.

Des tests de pelage sont ensuite réalisés à 90°C à l'aide d'un appareil de traction de marque Zwick. On observe que toutes les formulations comprenant un polymère conforme à l'invention, en l'occurrence, des polymères comprenant des motifs MEIO présentent une force de pelage comparable et supérieure à celle obtenue pour le copolymère de référence, sans MEIO.

Ce résultat est illustré dans le tableau 3 suivant.

**Tableau 3**

| Formulations hot melt comprenant les polymères suivants | Adhésion (test de pelage à 90°C) en N/25mmm | Ecart type |
|---|---|---|
| **T08 /E-VA/46** | 4.5 | 0.4 |
| **T08 /E-VA-MAM-MEIO/3 (0,5% MEIO)** | 6.8 | 0.4 |
| **T08 /E-VA-MAM-MEIO/2 (1.3% MEIO)** | 6.5 | 0.6 |
| **T08 /E-VA-MAM-MEIO/1 (4% MEIO)** | 6.9 | 1.2 |
| **T08 /E-VA-AE2H-MEIO/1 (4% MEIO)** | 6.8 | 1 |

Nous observons également une rupture adhésive côté aluminium pour les produits sans MEIO, alors que pour les produits comprenant des polymères avec des motifs MEIO nous observons une rupture cohésive, preuve du meilleur collage apporté par les polymères à motifs à base de MEIO. Les polymères à motifs à base de MEIO présentent également un meilleur mouillage du verre malgré une viscosité plus élevée. Le produit avec MAM et sans MEIO présente une force de pelage(non représentée) encore plus faible que l'E-VA/46 (polymère de référence).

### Exemple 4 : Formulations hot melt comprenant les copolymères de l'invention comme additifs, et tests d'adhésion entre verre et aluminium.

Des formulations sont préparées de la même manière que celles de l'exemple 2, à la différence que les copolymères comprenant des motifs à base de MEIO ne sont plus utilisés comme seul copolymère, mais comme additif d'un polymère de référence (E-VA/46). Le tableau 4 ci-dessous présente les rapports entre E-VA/46 et copolymère de l'invention utilisés dans les formulations (le taux global en copolymère est le même que celui de l'exemple 2).

Des tests d'adhésion réalisés suivant la procédure décrite dans l'exemple 2 sont effectués. Les résultats figurent dans le même tableau 4.

**Tableau 4**

| Composant 1 | % | Composant 2 | % | Adhésion (test de pelage à 90°C) en N/25mmm |
|---|---|---|---|---|
| **T08 /E-VA/46** | 100 | | | 4.5 |
| **T08 /E-VA-MAM-MEIO/3** | 100 | | | 6.8 |
| **T08 /E-VA/46** | 75 | **T08 /E-VA-MAM-MEIO/2 (1.3% MEIO)** | 25 | 8.6 |
| **T08 /E-VA/46** | 75 | **T08 /E-VA-MAM-MEIO/3 (0.5% MEIO)** | 25 | 5.8 |
| **T08 /E-VA/46** | 75 | **T08 /E-VA-AE2H-MEIO/1 (4% MEIO)** | 25 | 6 |

Nous observons que même en additif, les copolymères de l'invention améliorent l'adhésion, y compris pour de très faibles teneurs globales en MEIO dans les formulations.

### Exemple 5 ; étude du temps de collage

Le temps de collage est défini comme la différence entre le temps ouvert TO et le temps de prise TP, plus ce temps est élevé, plus la souplesse en application industrielle est grande.

Pour mesurer ces temps, les techniques suivantes sont utilisées :

Pour la mesure du temps de prise, le temps ouvert est fixé à 0.6 s: la mesure est validée lorsqu'on obtient 90% de défibrage pour au moins 3 cartons sur 5 (Ce test est réalisé sur 5 éprouvettes).

Pour la mesure du temps ouvert, nous fixons le temps fermé à 10s et le temps ouvert correspond au temps maximum auquel nous observons encore 90% de défibrage pour au moins 3 essais sur 5.

Ces mesures sont réalisées sur un appareil de marque OLINGER.

Les temps mesurés pour les formulations de l'exemple 4, et pour une formulation de l'exemple 2 sont présentés dans le tableau 5 ci-dessous. Nous pouvons constater que l'utilisation du copolymère de l'invention, que ce soit comme seul copolymère, ou comme additif du polymère de référence, permet d'augmenter significativement le temps de collage.

**Tableau 5**

| Composant 1 | % | Composant 2 | % | Temps ouvert (s) | Temps de prise (s) |
|---|---|---|---|---|---|
| E-VA/46 | 100 | | | 14 | 9 |
| T08 /E-VA-MAM-MEIO/3 | 100 | | | 16 | 4 |
| T08 /E-VA/46 | 75 | T08 /E-VA-MAM-MEIO/2 (1.3% MEIO) | 25 | 15 | 4 |
| T08 /E-VA/46 | 75 | T08 /E-VA-MAM-MEIO/3 (0.5% MEIO) | 25 | 15 | 4 |
| T08 /E-VA/46 | 75 | T08 /E-VA-AE2H-MEIO/1 (4% MEIO) | 25 | 15 | 5 |

### Exemple 6 : Tests d'élongation à la rupture d'un copolymère dé l'invention

Un test de fluage est effectué dans une DMA Q800 de TA Instruments à 60°C en imposant une contrainte en tension de 0,01 MPa.

L'E-VA/46, l'E-VA-MAM/1 et l'E-VA-MAM-MEIO/1 dont les synthèses sont décrites dans l'exemple 1 sont étudiés selon cette méthode. Les résultats sont présentés dans le tableau 6.

Nous constatons que le polymère porteur de groupes associatifs (E-VA-MAM-MEIO/1) peut subir des déformations plus importantes sans rompre. Le produit avec MEIO flue aussi moins vite que celui identique sans MEIO (E-VA-MAM/1).

**Tableau 6**

| Les dimensions de l'éprouvette testées sont : 10x4x3,5 mm | | |
|---|---|---|
| | Elongation à rupture % | Temps (mn) |
| T08 /E-VA-MAM/1 | 10 | 20 |
| T08 /E-VA-MAM-MEIO/1 | >17 (pas de rupture avant la fin du test) | 190 |
| T08 /E-VA/46 | 6 | 20 |

### Exemple 7 Formulations hot melt comprenant les copolymères de l'invention comme additifs, et tests d'adhésion sur PET.

Un copolymère est préparé selon le mode d'obtention du polymère T08 /E-VA-MAM-MEIO/3 de l'exemple 1. Le taux final de MEIO obtenu est déterminé à 0,6% par RMN. Une formulation hot melt est ensuite préparée avec ce copolymère selon la procédure décrite dans l'exemple 2.

Ce hot melt est ensuite enduit sur une surface de 15x15 cm2 de PET d'épaisseur 15 µm. Le film déposé sur la surface a une masse de 1 gramme. Le tout est pressé à 140°C sous 800 dN pendant 2 minutes, puis placé sous une plaque d'inox recouverte d'un poids de 5 kg et refroidie à l'aide d'un courant d'air.

La structure enduite est recouverte d'une même feuille de PET de 50 µm d'épaisseur, le mode de pressage et de refroidissement est le même que celui décrit précédemment dans l'exemple 3. L'épaisseur finale du joint de hot melt est de 40-45 µm.

Des bandes de 25 mm de largeur sont ensuite découpées dans cette structure « sandwich ».

Des structures équivalentes sont préparées avec des hot melt sur base des copolymères T08 /E-VA/46 et T08 /E-VA-MAM/1 de l'exemple 1.

L'adhésion entre les 2 bandes PET de ces 3 séries d'échantillons a ensuite été évaluée à l'aide d'un dynamomètre Zwick® selon une méthode mise au point pour des pelages de structures souples : le pelage est réalisée avec un angle de 180°C entre les bandes de PET.

Le test donne les résultats présentés dans le tableau 7 suivant :

**Tableau 7**

| structure à base du copolymère | T08 /E-VA/46 | T08 /E-VA-MAM/1 | T08 /E-VA-MAM-MEIO/3 |
|---|---|---|---|
| force de pelage (N/25 mm) | 0,2 | 0,2 | 0,4 |

Nous constatons que l'utilisation du copolymère selon l'invention permet d'atteindre des forces de collage beaucoup plus élevées sur PET.

## Revendications

1. Polymère comportant des motifs issus de l'éthylène et d'un monomère porteur de groupes associatifs, ledit monomère porteur de groupes associatifs comprenant :
(i) un groupe réactif capable de polymériser qui comprend une fonction éthylènique, de préférence choisi parmi un groupe (meth)acrylate ou (meth)acrylamide N mono-substitué ou N,N di-substitué, un groupe vinyle, allyle ou styrile ; et
(ii) un groupe associatif comprenant un hétérocycle azoté ; ledit monomère porteur de groupes associatifs répondant à la formule (1) : 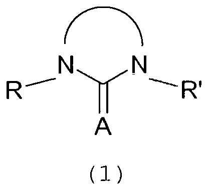 où :
R- désigne un groupe de formule T-(G)ₙ- dans lequel T est un groupe réactif capable de polymériser qui comprend une fonction éthylènique, de préférence choisi parmi un groupe (meth)acrylate ou (meth)acrylamide N mono-substitué ou N,N di-substitué, un groupe vinyle, allyle ou styrile ; n vaut 0 ou 1 et G est une chaîne alkylène linéaire ou ramifiée en C1-C24, de préférence C1-C10 éventuellement interrompue par un ou plusieurs atomes d'azote, plus préférentiellement une chaîne alkylène linéaire en C1-C6 ;
R' désigne un atome d'hydrogène,
A désigne un atome d'oxygène ou de soufre, de préférence un atome d'oxygène.

2. Polymère selon la revendication 1, **caractérisé en ce que** le groupe associatif est choisi parmi un groupe imidazolidonyle, triazolyle, triazinyle, bis-uréyle, uréido-pyrimidyle, de préférence, imidazolidonyle.

3. Polymère selon la revendication 1 ou 2, **caractérisé en ce que** les monomères associatifs sont choisis parmi le methacrylate d'éthylimidazolidone et le methacrylamide d'éthylimidazolidone.

4. Polymère selon l'une quelconque des revendications 1 à 3, **caractérisé en ce qu'**il comprend en outre des monomères acide carboxylique insaturé ou dérivés d'acide carboxylique insaturé.

5. Polymère selon l'une quelconque des revendications 1 à 4, **caractérisé en ce qu'**il comprend en outre des monomères ester vinylique.

6. Polymère selon l'une quelconque des revendications 1 à 5, **caractérisé en ce qu'**il comprend en outre des monomères anhydride maléique et/ou époxyde insaturé.

7. Colle ou adhésif thermofusible comprenant un polymère selon l'une quelconque des revendications 1 à 6, et au moins une résine tackifiante.

8. Adhésif selon la revendication 7 comprenant en outre un additif choisi parmi un plastifiant, une charge, un stabilisant et leurs mélanges.

9. Procédé de préparation de polymères tels que définis dans les revendications 1 à 6, par copolymérisation radicalaire haute pression effectuée en introduisant de l'éthylène, un monomère porteur de groupes associatifs conforme à l'une quelconque des revendications 1 à 3, et un initiateur de polymérisation dans un réacteur tubulaire à une pression comprise entre 10⁸ et 3.10⁸ Pa, à une température comprise entre 80 et 325°C, la quantité de monomères porteurs de groupes associatifs introduits allant jusqu'à 20% en masse par rapport à la masse totale du mélange d'éthylène, et de monomère porteur de groupes associatifs introduits.

10. Utilisation d'un polymère selon l'une quelconque des revendications 1 à 6 pour la fabrication d'un adhésif.

## Patentansprüche

1. Polymer, umfassend Einheiten, die sich von Ethylen und einem Monomer mit assoziativen Gruppen ableiten, wobei das Monomer mit assoziativen Gruppen Folgendes umfasst:
(i) eine polymerisierbare reaktive Gruppe, die eine Ethylenfunktion umfasst, vorzugweise ausgewählt aus einer (Meth)acrylat- oder N-mono-substituierten oder N,N-disubstituierten (Meth)-acrylamid-, Vinyl-, Allyl- oder Styrylgruppe; und
(ii) eine assoziative Gruppe, die einen stickstoffhaltigen Heterocyclus umfasst;
wobei das Monomer mit assoziativen Gruppen der Formel (1) entspricht: 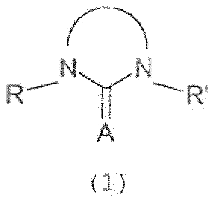 wobei:
R- für eine Gruppe der Formel T-(G)ₙ- steht, worin T für eine polymerisierbare reaktive Gruppe, die eine Ethylenfunktion umfasst, vorzugsweise ausgewählt aus einer (Meth)acrylat- oder N-mono-substituierten oder N,N-disubstituierten (Meth)-acrylamid-, Vinyl-, Alkyl- oder Styrylgruppe, steht; n den Wert 0 oder 1 aufweist und G für eine lineare oder verzweigte C1-C24- und vorzugsweise C1-C10-Alkylenkette, die gegebenenfalls durch ein oder mehrere Stickstoffatome unterbrochen ist, weiter bevorzugt eine lineare C1-C6-Alkylenkette, steht;
R' für ein Wasserstoffatom steht,
A für ein Sauerstoff- oder Schwefelatom, vorzugsweise ein Sauerstoffatom, steht.

2. Polymer nach Anspruch 1, **dadurch gekennzeichnet, dass** die assoziative Gruppe aus einer Imidazolidonyl-, Thiazolyl-, Triazinyl-, Bis-ureyl- oder Ureido-pyrimidylgruppe, vorzugsweise einer Imidazolidonylgruppe, ausgewählt ist.

3. Polymer nach Anspruch 1 oder 2, **dadurch gekennzeichnet, dass** die assoziativen Monomere aus Ethylimidazolidonmethacrylat und Ethyl-imidazolidonmethacrylamid ausgewählt sind.

4. Polymer nach einem der Ansprüche 1 bis 3, **dadurch gekennzeichnet, dass** es außerdem ungesättigte Carbonsäuren oder Derivate einer ungesättigten Carbonsäure als Monomere umfasst.

5. Polymer nach einem der Ansprüche 1 bis 4, **dadurch gekennzeichnet, dass** es außerdem Vinylestermonomere umfasst.

6. Polymer nach einem der Ansprüche 1 bis 5, **dadurch gekennzeichnet, dass** es außerdem Maleinsäure-anhydrid- und/oder ungesättigte Epoxidmonomere umfasst.

7. Schmelzklebstoff, umfassend ein Polymer nach einem der Ansprüche 1 bis 6 und mindestens ein klebrigmachendes Harz.

8. Klebstoff nach Anspruch 7, ferner umfassend einen Zusatzstoff aus der Gruppe bestehend aus einem Weichmacher, einem Füllstoff, einem Stabilisator und Mischungen davon.

9. Verfahren zur Herstellung von Polymeren gefäß einem der Ansprüche 1 bis 6 durch radikalische Hochdruck-Copolymerisation, bei der man Ethylen, ein Monomer mit assoziativen Gruppen gemäß einem der Ansprüche 1 bis 3 und einen Polymerisations-initiator bei einem Druck zwischen 10⁸ und 3.10⁸ Pa, bei einer Temperatur zwischen 80 und 325°C in einen Rohrreaktor einträgt, wobei die Menge der eingetragenen Monomere mit assoziativen Gruppen bis zu 20 Gew.-%, bezogen auf das Gesamtgewicht der Mischung aus Ethylen und Monomer mit assoziativen Gruppen, die eingetragen werden, betragen kann.

10. Verwendung eines Polymers nach einem der Ansprüche 1 bis 6 zur Herstellung eines Klebstoffs.

## Claims

1. Polymer comprising units resulting from ethylene and a monomer carrying associative groups, said monomer carrying associative groups comprising:
(i) a reactive group capable of polymerizing which comprises an ethylenic functional group, which reactive group is preferably chosen from a (meth)acrylate, N-monosubstituted (meth)acrylamide, N,N-disubstituted (meth)acrylamide, vinyl, allyl or styryl group; and
(ii) an associative group comprising a nitrogenous heterocycle; said monomer carrying associative groups corresponding to the formula (1) : 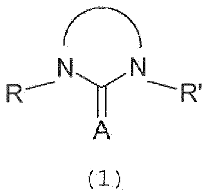
where:
R- denotes a group of formula T-(G)ₙ- in which T is a reactive group capable of polymerizing which comprises an ethylenic functional group, preferably chosen from a (meth)acrylate, N-monosubstituted (meth)acrylamide, N,N-disubstituted (meth) acrylamide, vinyl, allyl or styryl group, n has the value 0 or 1 and G is a linear or branched C₁-C₂₄, preferably C₁-C₁₀, alkylene chain optionally interrupted by one or more nitrogen atoms, more preferably a linear C₁-C₆ alkylene chain,
R' denotes a hydrogen atom,
A denotes an oxygen or sulphur atom, preferably an oxygen atom.

2. Polymer according to Claim 1, **characterized in that** the associative group is chosen from an imidazolidinyl, triazolyl, triazinyl, bis-ureyl or ureido-pyrimidyl group, preferably an imidazolidinyl group.

3. Polymer according to Claim 1 or 2, **characterized in that** the associative monomers are chosen from ethylimidazolidone methacrylate and ethylimidazolidone methacrylamide.

4. Polymer according to any one of Claims 1 to 3, **characterized in that** it additionally comprises unsaturated carboxylic acid or unsaturated carboxylic acid derivative monomers.

5. Polymer according to any one of Claims 1 to 4, **characterized in that** it additionally comprises vinyl ester monomers.

6. Polymer according to any one of Claims 1 to 5, **characterized in that** it additionally comprises maleic anhydride and/or unsaturated epoxide monomers.

7. Hot-melt adhesive comprising a polymer according to any one of Claims 1 to 6 and at least one tackifying resin.

8. Adhesive according to Claim 7, additionally comprising an additive chosen from a plasticizer, a filler, a stabilizer and their mixtures.

9. Process for the preparation of a polymer as defined in Claims 1 to 6 by high-pressure radical copolymerization carried out by introducing ethylene, a monomer carrying associative groups in accordance with any one of Claims 1 to 3 and a polymerization initiator into a tubular reactor at a pressure of between 10⁸ and 3 × 10⁸ Pa, at a temperature of between 80 and 325°C, the amount of monomers carrying associative groups which are introduced ranging up to 20% by weight, with respect to the total weight of the mixture of ethylene any monomer carrying associative groups which are introduced.

10. Use of a polymer according to any one of Claims 1 to 6 in the manufacture of an adhesive.
